# EUROPÄISCHE PATENTSCHRIFT

(11) **EP 0 799 335 B1**
(45) Veröffentlichungstag und Bekanntmachung des Hinweises auf die Patenterteilung: **08.09.1999**
(21) Anmeldenummer: 95938581.6
(22) Anmeldetag: 20.12.1995
(51) Int. Cl.: D01F 9/00, D01F 6/46, D01F 6/92, C08J 5/18

(54) **TECHNISCHE UND NICHTTECHNISCHE TEXTILE ERZEUGNISSE SOWIE VERPACKUNGSMATERIALIEN**
TECHNICAL AND NON-TECHNICAL TEXTILE PRODUCTS AND PACKAGING MATERIALS
PRODUITS TEXTILES TECHNIQUES ET NON TECHNIQUES ET MATERIAUX D'EMBALLAGE

(30) Priorität: 22.12.1994 DE 4446054; 07.04.1995 DE 19513235
(43) Veröffentlichungstag der Anmeldung: 08.10.1997
(73) Patentinhaber: BIOTEC BIOLOGISCHE NATURVERPACKUNGEN GMBH, 46446 Emmerich (DE)
(72) Erfinder: LÖRCKS, Jürgen, D-46459 Rees (DE); POMMERANZ, Winfried, D-32130 Enger (DE); SCHMIDT, Harald, D-46446 Emmerich (DE)
(74) Vertreter: Troesch Scheidegger Werner AG
(86) Internationale Anmeldenummer: IB9501142
(87) Internationale Veröffentlichungsnummer: WO9619599

(56) Entgegenhaltungen:
- EP-A- 0 541 050
- EP-A- 0 542 155
- EP-A- 0 596 437
- WO-A-90/05161
- WO-A-91/16375
- WO-A-92/02559
- WO-A-92/20740
- WO-A-93/07213
- DATABASE WPI Section Ch, Week 9227 Derwent Publications Ltd., London, GB; Class A17, AN 92-222334 & JP,A,04 146 217 ( TORAY IND INC) , 20.Mai 1992
- DATABASE WPI Section Ch, Week 9112 Derwent Publications Ltd., London, GB; Class A32, AN 91-082832 & JP,A,03 027 109 ( HAGIHARA KOGYO KK) , 5.Februar 1991

## Beschreibung

Die vorliegende Erfindung betrifft textile Erzeugnisse sowie Verpackungsmaterialien, Verfahren zu deren Herstellung sowie diverse technische wie nichttechnische Verwendungen der textilen Erzeugnisse.

Textilien, Textilverbundstoffe, sowohl aus dem technischen wie auch aus dem nichttechnischen Anwendungsgebiet sowie Verpackungsmaterialien und dgl. werden sowohl aus natürlichen Rohstoffen gefertigt, wie auch aus halbsynthetischen und vollsynthetischen Rohstoffen, wie z.B. Kunststoffen.

Nebst dem gewichtigen Argument der sogenannten Hautverträglichkeit im Zusammenhang mit Bekleidungstextilien sowie Hygieneartikeln wird vermehrt auch das Argument der biologischen Abbaubarkeit laut, damit insbesondere sogenannte Einwegprodukte bzw. sogenannte Wegwerfartikel problemlos entsorgt werden können. Dabei handelt es sich beispielsweise um Hygieneartikel, Einlagestoffe, Watte, Netze, Vliese und dgl. Bei diesen Produkten wird teilweise die relativ teure Baumwolle oder halbsynthetische Materialien, wie Zellstoff, Viskose, usw. verwendet, währenddem vollsynthetische Materialien aufgrund schlechter Hautverträglichkeit, weniger gefragt sind. Nebst der Tatsache, dass die biologische Abbaubarkeit von natürlichen Rohstoffen normalerweise ausreichend ist, fällt daneben aber negativ ins Gewicht, dass in der Regel die mechanischen Eigenschaften dieser Materialien nicht eben überragend sind. Die wesentlich bessere mechanische Eigenschaften aufweisenden synthetischen Rohstoffe bieten aber aufgrund schlechter Hautverträglichkeit und schlechter Abbaubarkeit keine Lösung für die gestellte Problematik.

Es ist daher eine Aufgabe der vorliegenden Erfindung textile Rohstoffe für technischen und nichttechnischen Einsatz sowie zur Verwendung als Verpackungsmaterialien zu schaffen, welche gute biologische Abbaubarkeit aufweisen, gegebenenfalls gut hautverträglich sind und über mindestens akzeptable mechanische Eigenschaften verfügen.

Aus dem Stand der Technik ist beispielsweise die Herstellung von Chemiefasern bekannt, aus welchen textile Rohstoffe gefertigt werden können. Bei der Herstellung dieser Chemiefasern werden diese direkt aus einer Schmelze oder über mehrere Zwischenschritte zu Fäden versponnen und anschliessend zur Erhöhung der Festigkeit verstreckt. Aus der Kunststoffindustrie ist ferner das Recken von synthetischen, thermoplastischen Werkstoffen bekannt. Jedoch alle diese bekannten Kunststoffasern enthalten wesentliche Anteile, welche nicht vollständig biologisch abbaubar sind, insbesondere diejenigen Bestandteile, welche zur Erzielung bestimmter Eigenschaften, wie insbesondere mechanischer Eigenschaften beigefügt werden.

In der EP-A-541 050 wird vorgeschlagen, Stärkefasern nach dem Schmelzspinnverfahren herzustellen, wobei dazu unter anderem modifizierte und/oder nicht-modifizierte Stärke verwendet wird. Unter modifizierter Stärke werden einerseits destrukturierte Stärken verstanden sowie andererseits chemisch modifizierte Stärken. Diese Stärkekomponenten werden mit einer Reihe weiterer Polymerkomponenten gemischt und zu Fasern verarbeitet. Aus destrukturierter Stärke hergestellte Fasern sind für die Herstellung von textilen Erzeugnissen ungeeignet, da sie über schlechte mechanische Eigenschaften verfügen, und chemisch modifizierte Stärke als Fasermaterial ergibt in der Regel ungenügende biologische Abbaubarkeit.

Es ist daher eine weitere Aufgabe der vorliegenden Erfindung Rohmaterialien, wie insbesondere Fäden, Fasern, Monofile und dgl. für die Herstellung von textilen Rohstoffen zu schaffen, welche gute biologische Abbaubarkeit aufweisen, gegebenenfalls gut hautverträglich sind und über mindestens akzeptable mechanische Eigenschaften verfügen.

Erfindungsgemäss werden textile Erzeugnisse, sowohl für technischen wie nichttechnischen Einsatz sowie Verpackungsmaterialien vorgeschlagen gemäss dem Wortlaut nach Anspruch 1.

Weiter wird ein Verfahren zur Herstellung von hochfesten Fäden, Fasern sowie Monofile und dgl. gemäss dem Wortlaut, insbesondere nach Anspruch 12 vorgeschlagen.

Vorgeschlagen wird, dass textile Erzeugnisse sowohl für technischen wie nichttechnischen Einsatz, Verpackungsmaterialien sowie die dazu notwendigen Ausgangsmaterialien wie Fäden, Fasern, Monofile, Vliese, Watten, Gewebe, Netze und dgl. mindestens eine Polymermischung enthalten, welche thermoplastisch verarbeitbare Stärke beinhaltet.

Aus der WO90/05161 ist es bekannt, thermoplastisch verarbeitbare Stärke oder kurz thermoplastische Stärke aus nativer Stärke unter Zuhilfenahme eines plastifizierenden Materials, zu erzeugen. Dabei ist es wesentlich, dass die Destrukturierung und Plastifizierung der nativen Stärke weitgehendst unter Ausschluss von Wasser erfolgt, d.h., dass bei der Herstellung der thermoplastischen Stärke der Wassergehalt deutlich unter 5 Gew.% liegt, vorzugsweise unterhalb 1 - 2 Gew.%, bezogen auf das Gewicht der Mischung Stärke/Plastifizierungsmittel. Als Plastifizierungsmittel eignen sich insbesondere Glyzerin und Sorbitol, jedoch können auch andere Zuschlagsmaterialien verwendet werden, welche einen Löslichkeitsparameter aufweisen, welcher im Bereich des Löslichkeitsparameters der Stärke liegt. Weiter wird vorgeschlagen, als Füllstoffe der thermoplastischen Stärke Gelatine, Protein, Polysaccaride, Zellulosederivat, ein synthetisches Polymer und/oder Gelatinphtalat beizumischen. Die thermoplastisch verarbeitbare Stärke eignet sich u.a. zur Herstellung von Fasern, Folien oder Netzwerken.

Da die Herstellung von thermoplastischer Stärke in der genannten WO90/05161 ausführlich beschrieben ist, wird an dieser Stelle auf eine Wiederholung dieses Standes der Technik verzichtet.

Für die Herstellung aer erfindungsgemäss beanspruchten, textilen Erzeugnisse, Verpackungsmaterialien sowie deren Ausgangsrohstoffe eignen sich aber nebst reiner thermoplastischer Stärke auch sogenannte Polymermischungen oder Polymerblends, welche nebst thermoplastischer Stärke mindestens eine der nachfolgenden Komponenten enthält:
- ein Polyolefin sowie ein Blockcopolymer als Phasenvermittler,
- ein Polyolefin sowie ein Aethylenacrylatmaleinsäureanhydridcopolymer,
- ein Cellulosederivat, wie ein Celluloseäther, ein Celluloseester oder ein Celluloseacetat-Butyratmischester,
- ein hydrophobes biologisch abbaubares Polymer, wie ein aliphatischer Polyester, ein hydrophobes Protein oder Polyvinylalkohol,
- ein aromatischer Polyester und/oder ein Polyestercopolymer, hergestellt aus üblichen Diolen und aus aromatischen und aliphatischen Dicarbonsäuren,
- ein Polyesteramid.

Im Zusammenhang mit Polymermischungen, gerichtet auf thermoplastische Stärke, Polyolefine sowie ein Blockcopolymer als Phasenvermittler sei auf die WO91/16375 verwiesen.

Im Zusammenhang mit der Polymermischung, basierend auf thermoplastischer Stärke, ein Polyolefin sowie ein Aethylenacrylatmaleinsäureanhydridcopolymer wird auf die WO92/20740 verwiesen.

Polymermischungen, bestehend aus thermoplastischer Stärke sowie einen Cellulosederivat sind in der EP-A-542 155 eingehend beschrieben.

Polymermischungen, wiederum basierend auf thermoplastischer Stärke sowie einem biologisch abbaubaren hydrophoben Polymer, sind in der EP-A-596 437 ausführlich dargelegt.

Bei der Lösung geht die Erfindung vom Grundgedanken aus, Rohmaterialien, wie Fäden bzw. hochfeste Fäden, Fasern, Monofile, Flocken und dgl. aus einem Extrudat einer thermoplastisch verarbeitbaren Stärke und/oder gegebenenfalls einer biologisch abbaubaren Polymermischung auf Basis von thermoplastischer Stärke herzustellen. Das so hergestellte, erfindungsgemässe Rohmaterial ist somit vollständig biologisch abbaubar.

Die Kombination von thermoplastischer Stärke mit anderen vorzugsweise polymeren Komponenten zielt darauf hin, die an sich schon relativ guten, mechanischen Eigenschaften der thermoplastischen Stärke weiter zu verbessern, und gegebenenfalls verwendungsgezielt anzupassen. Insbesondere die Kombination von thermoplastischer Stärke mit den obgenannten anderen, vorzugsweise polymeren Mischungspartnern zielt darauf hin, die an sich schon günstigen Eigenschaften der thermoplastischen Stärke verwendungsgerecht weiter zu optimieren. So haben sich insbesondere Polymermischungen, bestehend aus thermoplastischer Stärke und aliphatischen wie auch aromatischen Polyestern, Polyesterurethanen und dgl. als besonders geeignet herauskristallisiert. Gelegentlich handelt es sich bei den Mischungspartnern um für sich allein nicht biologisch abbaubare Polymere, wie beispielsweise aromatische Polyester, welche aber in Kombination mit anderen Mischungspartnern, wie beispielsweise aliphatischen Polyestern und der thermoplastischen Stärke dennoch biologisch abgebaut werden können.

Insbesondere Polycaprolacton, Polyhydroxybuttersäure, Polymilchsäure, Polyhydroxybenzoesäure, Polyhydroxybuttersäure-Hydroxyvaleriansäurecopolymer und ähnliche haben sich als besonders günstige Mischungspartner mit der thermoplastischen Stärke herauskristallisiert. Zu erwähnen sind insbesondere auch aliphatische Polyester, basierend auf aliphatischen Dicarbonsäuren und aliphatischen Diolen, wie beispielsweise Homopolymere oder Copolymere von Polybuthylensuccinat-Adipat und Polyethylensuccinat-Adipat. Weitere Mischungspartner für die thermoplastische Stärke für die Herstellung der erfindungsgemäss definierten textilen Rohmaterialien wie textilen Erzeugnisse sind die nachfolgenden Materialien:
- Gelatine, Protein, Zein, Polysaccaride, Cellulosederivate, Polylactide, Polyvinylalkohol, Polyvinylacetat, Polyacrylat, Zuckeralkohol, Schellack, Casein, Polyacetal, Polyesterurethan, Copolyester aus aliphatischen Diolen und aromatischen Dicarbonsäuren, Fettsäurederivate, Lecitin, Chitosan, Polyesteramid.

Im weiteren ist es möglich, den erfindungsgemäss definierten Ausgangsmaterialien für die Herstellung der textilen Rohstoffe und Erzeugnisse Naturfasern beizufügen, wie beispielsweise Baumwolle, Wolle, Sisal, Ramie, Leinen oder Flachs.

Selbstverständlich ist es möglich noch weitere Additive bzw. zuschlagstoffe dem Ausgangsmaterial beizufügen, wie allgemein üblich bei der Herstellung von Fasern, Monofilen, Fäden und dgl.

Beispiele von möglichen und bevorzugten Polymermischungen, welche geeignet sind für die Herstellung von Fasern, Monofilen, Fäden, Folien und dgl. für technische und nichttechnische textile Erzeugnisse sowie für Verpackungsmaterialien sind in der nachfolgend dargestellten Tabelle 1 aufgeführt. Dabei schliessen die sieben angegebenen Beispiele sowohl die Komponenten mit ein, welche für die Herstellung der thermoplastischen Stärke verwendet worden sind, wie auch die möglichen Mischpartner zur thermoplastischen Stärke für die Herstellung der erfindungsgemäss vorgeschlagenen Polymermischungen. Zudem enthält die Tabelle die Verarbeitungsbedingungen und insbesondere den während der Herstellung der Polymermischungen herrschende Wassergehalt im Extruder, welcher durchwegs < als 0,1 Gew.% betrug. Schlussendlich sind in der Tabelle bevorzugte Anwendungsmöglichkeiten der beispielsweise hergestellten Polymermischungen angeführt. Selbstverständlich enthält die Tabelle nur Beispiele, und alle eingangs erwähnten Komponenten sind geeignet für das Mischen mit thermoplastischer Stärke zur Herstellung von Ausgangsmaterialien für technische, nichttechnische textile Erzeugnisse sowie Verpackungsmaterialien.

**Tabelle 1**

| Beispiele | | | | | | | |
|---|---|---|---|---|---|---|---|
| Example | 1 | 2 | 3 | 4 | 5 | 6 | 7 |
| ¹Starch % | 38,2 | 24,6 | 29,2 | 24,6 | 30,7 | 28,0 | 21.5 |
| ¹Sorbitol % | 12,8 | 8,2 | 9,4 | 8,8 | 9,1 | 8,8 | 6,9 |
| ¹Glycerin % | 8,5 | 6,0 | 6,2 | 6,0 | 7,4 | 6,2 | 4,1 |
| ²TPS % | 54,5 | 35,5 | 41,1 | 36,0 | 43,5 | 39,5 | 29,7 |
| H₂O % | < 0,1 | < 0,1 | < 0,1 | < 0,1 | < 0,1 | < 0,1 | < 0,1 |
| ³PLA % | - | - | - | - | 48,8 | 55,0 | - |
| ⁴Polyamid1 | 40,5 | 61,2 | - | - | - | - | 67,5 |
| ⁵Polyester 1 | - | - | 55,2 | 60,6 | - | - | - |
| ⁶PCL % | - | - | - | - | 4,0 | 2,0 | - |
| H₂O % | < 0,1 | < 0,1 | < 0,1 | < 0,1 | < 0,1 | < 0,1 | < 0,1 |
| ⁷Extrusion | ZSK 40 | ZSK 40 | ZSK 40 | ZSK 40 | ZSK 40 | ZSK 40 | ZSK 40 |
| T°C | 220 | 206 | 203 | 210 | 215 | 210 | 220 |
| Pressure bar | 6,5 | 2,5 | 1,5 | 1,5 | 6,2 | 7,5 | 0,5 |
| MFI g/10 | 9 | 13 | 12,5 | 13 | 8,5 | 8,0 | 22 |
| Granulat | 4 mm | 4 mm | 4 mm | 4 mm | 4 mm | 4 mm | 4 mm |
| Gra H₂O% | 3,5 | 3,6 | 3,4 | 3,6 | 3,4 | 3,4 | 3,0 |
| Anwendung | | | | | | | |
| Blasfolie | + | + | + | + | + | + | - |
| Flachfolie | + | + | + | + | + | + | - |
| Platten* | + | + | + | + | + | + | - |
| Spritzguß* | + | - | + | - | + | - | - |
| Fasern | - | + | - | + | - | + | + |

| | | | | | | | |
|---|---|---|---|---|---|---|---|
| (* nicht erfindungsgemäss) | | | | | | | |
| ¹Starch = nativ potatoe starch dried 3,5% H₂O, Sorbitol = Sorbitol LG DHR 71%ig, Glycerin 99,5%ig; | | | | | | | |
| ²TPS = thermoplastic starch = starch+sorbitol+glycerin < 0,1 % H₂O, - Wasseranteil durch Entgasung, nach dem bekannten Verfahren EP 0 397 819 besteht wasserfreie TPS aus Stärke, Sorbitol und Glycerin; | | | | | | | |
| ³PLA (Polylactic acid resin) = Mitsui Toatsu Chemicals LACEA H 100 MFR 13 190°C 2,16 kg; | | | | | | | |
| ⁴Polyamid 1 = Bayer BAK 1095 Polyesteramid MFI 2,5 150°C 2,16 kg; | | | | | | | |
| ⁵Polyester 1 = BASF ZK 242/108 Copolyester aus aliphatischen Diolen und aliphatischen/aromatischen Dicarbonsäuren MVR 3,0 bei 190°C/2,16 kg; | | | | | | | |
| ⁶PCL (Polycaprolacton) = Union Carbide Tone Polymer P-787 MFI 1.0 125°C 44psi g/10 min; | | | | | | | |
| ⁷Extrusion Equipment = Werner&Pfleiderer ZSK 40; | | | | | | | |

Nachfolgend wird die Herstellung eines erfindungsgemäss definierten Rohmaterials, wie beispielsweise eines hochfesten Fadens bzw. von Fasern, geeignet für die Herstellung der textilen Erzeugnisse, beispielsweise näher erläutert.

Die in einem Extruder modifizierten Ausgangsstoffe werden als Folie ausgetragen und in Fäden geschnitten oder direkt als Fäden ausgetragen, zur Erhöhung ihrer Festigkeit verstreckt und anschliessend aufgespult oder in einem In-Line-Verfahren direkt zu Geweben oder dgl. weiterverarbeitet. Die optimalen Verarbeitungstemperaturen der erfindungsgemässen Fäden, insbesondere während des Verstreckens liegen bei ca. 30 bis 40°C und sind damit wesentlich niedriger als die von synthetischen thermoplastischen Werkstoffen, deren Verarbeitungstemperatur üblicherweise bei 100°C liegt. Während des Verstreckens bei ca. 30 bis 40°C erhalten die Makromoleküle eine Orientierung, die eine Erhöhung der Reissfestigkeit, Zunahme der Transparenz und eine Erhöhung der Stabilität gegen Einwirken von Wasser und Wasserdampf bewirkt. Ueberraschenderweise nimmt durch diese Behandlung die maximale Reisskraft des Fadens um etwa eine Zehnerpotenz zu im Vergleich zu einem ungereckten Faden mit gleichem Querschnitt.

Die in einem Extruder modifizierte Mischung der Ausgangsstoffe aus thermoplastisch verarbeitbarer Stärke oder einer biologisch abbaubaren Polymermischung auf Basis einer thermoplastischen Stärke kann zunächst zu einer Folie verarbeitet, wie beispielsweise in DE-B-42 28 016 beschrieben, und anschliessend in Fäden geschnitten und verstreckt werden, oder direkt in einem In-Line-Verfahren über eine Mehrlochdüse als Einzelfäden extrudiert und direkt anschliessend verstreckt werden. Das Verstrecken der Fäden erfolgt monoaxial bei Raumtemperatur oder bei Temperaturen bis maximal 60°C, vorzugsweise jedoch bei 30 bis 40°C an der Luft oder in einem anderen Medium, z.B. in einem Streckbad aus Wasser und/oder Lösungsmittel oder auch in einem anderen gasförmigen Medium. Das Verstreckungs- bzw. Reckverhältnis liegt im wesentlichen zwischen 1:5 und 1:20, vorzugsweise bei 1:8. Bei der Extrusion der Ausgangsstoffmischung als Folie bieten sich folgende Möglichkeiten der Weiterverarbeitung an: Direkt hinter einer Folienextrusionsanlage (Blas- oder Flachfolie) wird die Folie kontinuierlich In-Line in einzelne Fäden geschnitten, die entstehenden Fäden anschliessend nach den obigen Verfahrensparametern In-Line verstreckt und einzeln als reissfeste Bändchen auf Spulen aufgewickelt. Die so entstandenen biologisch abbaubaren Bändchen können in Bändchenform direkt eingesetzt werden, oder aber auf einer weiteren Maschine ausgehend von den gewickelten Einzelspulen einstufig zu Geweben, Netzen, Textilien oder Seilen weiter verarbeitet werden. Ausserdem lassen sich aus den entstandenen Einzelspulen in einem zweistufigen Verfahren über den Zwischenschritt des Bäumvorganges besagte Gewebe, Netze, Textilien oder Seile herstellen.

Weiterhin kann das Folienausgangsmaterial als Rollenware in einem Arbeitsgang zu Fäden geschnitten, diese In-Line nach obigen Verfahrensparametern verstreckt und zusammen aufgebäumt werden. Die entstehenden Kettbäume, bestehend aus einer Vielzahl von reissfesten Einzelfaden, lassen sich dann in einem weiteren Arbeitsgang zu Geweben, Netzen, Textilien oder Seilen verarbeiten.

Ebenso kann eine nach obigen Verfahrensparametern monoaxial verstreckte Folie als Ausgangsmaterial (als Rollenware) verwendet werden. Diese Folie wird auf einer Maschine in einem Arbeitsgang zu einzelnen reissfesten Fäden geschnitten und zu Geweben, Netzen, Textilien oder Seilen verarbeitet oder als Bändchen einzeln aufgespult.

Nach einer weiteren Verarbeitungsmöglichkeit wird das Folienausgangsmaterial in Rollenform in einem Arbeitsgang zu Fäden geschnitten, nach obigen Verfahrensparametern verstreckt und anschliessend In-Line auf der gleichen Maschine zu Geweben, Netzen, Textilien oder Seilen verarbeitet oder als Bändchen einzeln aufgespult.

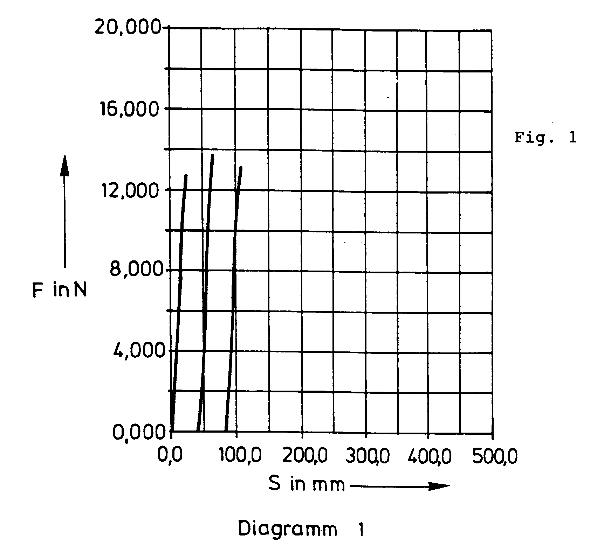

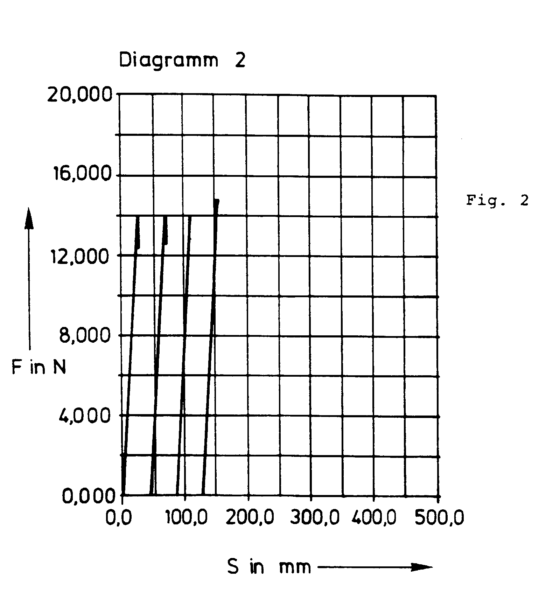

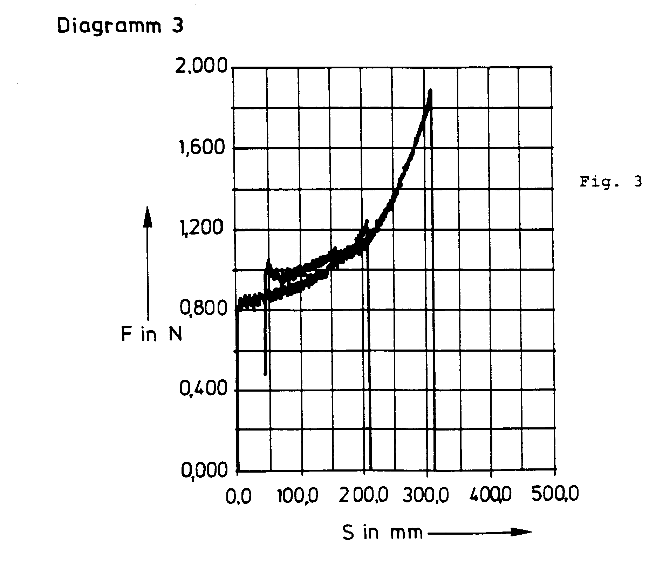

Die vorteilhaften Eigenschaften der erfindungsgemässen Fäden sollen anhand von durchgeführten Folienzugversuchen verdeutlicht werden. Ein Folienstreifen, hergestellt aus einem biologisch abbaubaren Werkstoff aus einer thermoplastischen Stärke und einem abbaubaren aliphatischen Polyester (BIOFLEX BF 102) mit den Abmessungen Länge/Breite/Dicke von 50 mm/2 mm/0,025 mm wurde im Verhältnis 1:8 bei einer Temperatur von 35°C verstreckt. Während mehrerer Zugversuche wurde festgestellt, dass die Reissfestigkeit bzw. Zugfestigkeit dieses Folienstreifens bei einer aufgebrachten Reisskraft von 12,8 bis 14,8 N zwischen 216 und 250 N pro mm² liegt. Demgegenüber beträgt die Reissfestigkeit eines vergleichsweise getesteten nicht verstreckten Folienstreifens bei einer Reisskraft von 1,3 bis 1,9 N nur ca. 25,1 bis 38,1 N pro mm². Folgende durchgeführte Folienzugversuche 1 und 2 verdeutlichen diese Ergebnisse anhand der jeweils dazugehörigen Diagramme 1 und 2 (Fig. 1 und 2) für verstreckte Fäden, wobei h die Probendikke, A_{O} die Probenquerschnittsfläche, Fₘₐₓ die maximale Reisskraft des Probensteifens, δₘₐₓ die maximale Reissfestigkeit, bezogen auf die Probenquerschnittsfläche, S-(Fₘₐₓ) der Dehnungsbetrag der Probe in mm und ε- (Fₘₐₓ) die Dehnung in % der ursprünglichen Messlänge sind. Der Vergleichsversuch 3 zeigt anhand des Diagrammes 3 (Fig. 3) die Ergebnisse bei Zugbeanspruchung nicht verstreckter Fäden, wobei zusätzlich die Zugkraft, bei der die Dehnung beginnt (F_{Dehnung}) und die dabei wirkende Streckspannung ermittelt wurden.

### 1. Folienzugversuch mit verstreckter Folie (Fig. 1).

| Versuchsparameter: | |
|---|---|
| Probenbreite | = 2 mm |
| Messlänge | = 50 mm (entspricht Abstand der Druckplatten) |
| Vorkraft bei Beginn der Messung | = 0,2 N |
| Bruchkriterium | = 2 N |
| Geschwindigkeit bis Vorkraft | = 500 mm/min |
| Prüfgeschwindigkeit | = 500 mm/min |

Alle drei Proben wurden bei einer Temperatur von 35°C im Verhältnis 1:8 verstreckt.

| Versuchsergebnisse | | | | | | |
|---|---|---|---|---|---|---|
| Nr. | h mm | A_{O} mm² | F-ₘₐₓ N | δ-ₘₐₓ N/mm² | S-(Fₘₐₓ) mm | ε-(Fₘₐₓ) % |
| 1 | 0,027 | 0,054 | 12,765 | 236,389 | 26,20 | 52,39 |
| 2 | 0,028 | 0,056 | 13,748 | 245,500 | 25,74 | 50,88 |
| 3 | 0,030 | 0,060 | 13,027 | 217,117 | 27,75 | 55,50 |

### 2. Folienzugversuch mit verstreckter Folie (Fig. 2).

### Versuchsparameter:

Die Versuchsparameter entsprechen denen des 1. Folienzugversuchs.

| Versuchsergebnisse | | | | | | |
|---|---|---|---|---|---|---|
| Nr. | h mm | A_{O} mm² | F-ₘₐₓ N | δ-ₘₐₓ N/mm² | S-(Fₘₐₓ) mm | ε-(Fₘₐₓ) % |
| 1 | 0,028 | 0,056 | 13,893 | 248,089 | 26,51 | 52,49 |
| 2 | 0,032 | 0,064 | 13,866 | 216,656 | 27,74 | 55,00 |
| 3 | 0,028 | 0,056 | 14,015 | 250,268 | 26,24 | 51,87 |
| 4 | 0,031 | 0,062 | 14,760 | 238,065 | 26,67 | 53,33 |

### 3. Folienzugversuch mit ungestreckter Folie (Fig. 3).

### Versuchsparameter:

Die Versuchsparameter entsprechen denen des 1. Folienzugversuchs.

| Versuchsergebnisse | | | | | |
|---|---|---|---|---|---|
| Nr. | Kennung-22 Bemerkung | h mm | A_{O} mm² | F-ₘₐₓ N | δ-ₘₐₓ N/mm² |
| 1 | Längsausdehnung | 0,025 | 0,050 | 1,257 | 25,14 |
| 2 | Längsausdehnung | 0,025 | 0,050 | 1,906 | 38,120 |

| Nr. | S-(Fₘₐₓ ) mm | ε-(Fₘₐₓ) % | F_{Dehnung} N | Streckspannung N/mm² | |
|---|---|---|---|---|---|
| 1 | 209,58 | 419,17 | 0,85 | 17 | |
| 2 | 267,92 | 535,84 | 1,05 | 21 | |

Wie die Versuche zeigen, können die erfindungsgemässen Fasern bzw. Fäden mit Hilfe eines sonst bei der Herstellung von Chemiefasern üblichen Streckverfahrens bearbeitet werde. Das Verstrecken der Fäden ist bereits bei 35°C sehr effektiv und verbessert die Reissfestigkeit beträchtlich. Ferner kann die gesamte Herstellung der Fäden einschliesslich des Verstrekkens in einem kontinuierlichen und einstufig ablaufenden Verfahren erfolgen. Die erfindungsgemässen Fäden bzw. Fasern aus vollständig biologisch abbaubaren Werkstoffen eignen sich beispielsweise bei deren Herstellung als Bändchen und/oder Monofile als Endprodukt für Anwendungen in Landschafts- und Gartenbau (Pflanzenbändchen o.ä.), als Verpackungsmaterial (Verpackungsschnüre und -bänder o.ä.) oder als Zwischenprodukt auf Kettbäumen oder Einzelspulen zur Weiterverarbeitung zu vollständig biologisch abbaubaren Netzen, Geweben, Textilien oder Seilen. Ferner können besonders feste, vollständig biologisch abbaubare Fasern und/oder Seile durch Verdrillen oder Flechten der Bändchen/Monofilen hergestellt werden. Diese besonders festen Bänder und/oder Seile lassen sich zu Netzen, Geweben und Textilien aller Art weiterverarbeiten.

Anwendungen für Produkte dieser Art sind beispielsweise:
- Verpackungssäcke (Raschel- bzw. Netzsäcke usw.) mit offenen oder halbdichten oder dichten Strukturen für, z.B. Kartoffeln, Zitrusfrüchte, Zwiebeln, usw., Spielzeug, Haushaltwaren sowie andere Produkte aller Art,
- Leichtschutzzäune für Bäume oder Pflanzen aller Art bei Aufforstungen/Neupflanzungen im Forstbereich oder Gartenbau, z.B. gegen Wildverbiss oder als Erosionsschutz,
- Fliegenschutznetze für Türen und Fenster oder Moskitonetze,
- Baumverpackungen (z.B. Tannenbäume usw.) und Netze für Wurzelballen im Garten- und Landschaftsbau,
- reissfeste Abfallsäcke,
- Filtergewebe aller Art,
- schweissbare Banderolierungen in Form von Aufreissbanderolen, Umreifungsbanderolen o.ä.,
- Netze im Sportbereich (Badminton, Tischtennis, Volleyball o.ä.),
- Gittergewebe für Heimtierhaltung, z.B. Kaninchenställe, Taubenverschläge usw.,
- Schutznetze aller Art, z.B. für Personenschutz, Steinschlagschutz, Erosionsschutz, auch im Weinbergbau, in der Landwirtschaft und im Gartenbau,
- Netzrollenware für Baumärkte usw. (Heimwerkerbedarf),
- Produkte für Fischzucht und Fischerei/Binnenfischerei,
- Textilien aller Art, z.B. Tischdecken, Windschutz, Sonnenschutz, Abdeckplanen, Markisen, usw.,
- Agrotextilien, z.B. Bodenabdeckungen zur Ernteverfrühung, Wind- und Sonnenschutz,
- Fasern als Trockenvlies (air layed paper),
- thermobonded Vliesstoffe,
- textiles Verpackungsband, z.B. für Kartonumreifung, Palettenumreifung usw.,
- Schutzkleidung oder Einwegkleidung in Reinsträumen, z.B. Hauben, Handschuhe, Schuhüberzüge, Overalls und Kittel.

Ein weiteres Anwendungsbeispiel für die erfindungsgemässen Fäden im textilen Bereich ist deren Verarbeitung zu Windelprodukten. Eine solche vollständig biologisch abbaubare Windel kann wie folgt aufgebaut sein.

Die äussere Hülle bildet eine biologisch abbaubare Folie, wie sie beispielsweise in DE-B-42 28 016 beschrieben ist, die auf eine weiche Zellstoffschicht aufkaschiert ist. Weitere weiche Zellstoffschichten, die SAP-Produkte (Superabsorber als Stärkepfropfpolymere) enthalten und stark wasseraufsaugend eingestellt sind, werden eingebracht. Der Innenkern besteht aus einem Vlies aus bioabbaubarem Material. Die Windel in dem vorbezeichneten Aufbau kann mit hoher Produktionsgeschwindigkeit hergestellt werden, weil die Vorprodukte als Rollenware vorliegen und das Zusammenbringen der einzelnen Schichten durch Siegelvorgänge erfolgt. Durch z.B. Stanzen wird die Windelform und -grösse aus dem Rollenmaterial hergestellt. Die Fixierung der Ränder und der Gummifäden am elastischen Bein- und Bauchabschluss erfolgt durch eine Heissiegelung. Haftklebestreifen oder Klettverschlüsse werden zur Befestigung des Windelvorderteils mit dem Rückenteil verwendet.

Die erfindungsgemässen Fäden bzw. Fasern können auch selbst als lockere Materialien wie Spinnfasern oder Filamentfasern hergestellt und zu Vliesstoffen, Filzen und Textilverbunden verarbeitet werden. Die Verfestigung der Faservliese erfolgt durch Vernadeln, Vermaschen, Verwirbeln, Schmelzen oder Siegeln der Fasern. Die Vliese können auch durch zusätzliche Fäden, Gewebe oder Gewirke verstärkt werden, z.B. gleichartigen oder ungleichartigen abbaubaren Materialien, wie z.B. Cellulosefasern, Pflanzenfasern aus Baumwolle, Kapok, Sisal, Flachs, Hanf, Jute, Kenaf, Ramie, Kokos und Fasern aus Wolle oder Seide. Diese vorgenannten Vliese, Filze und Textilverbunde können verwendet werden zur Herstellung von Filtern, Kunstleder, Wegwerfartikeln wie Staubtücher, Putztücher, Windeln, als Isoliermaterial für technische oder Konfektionstextilien, wie z.B. Schutzkleidung.

Weitere Textilien, textile Halb- und Fertigfabrikate und daraus hergestellte Fertigwaren sind beispielsweise linienförmige Gebilde wie Garne, Leinen, Bindfäden, Schnüre, Seile, Zwirn; flächenförmige Gebilde wie Klebewaren, Filze, Nadelfilze, Wirk- und Strickwaren oder voluminöse Gebilde wie Flocken, Watten, Filtermatten und Polierwatten.

## Patentansprüche

1. Textiles Erzeugnis für technische sowie nichttechnische Verwendung, enthaltend mindestens eine biologisch abbaubare Polymermischung, thermoplastische Stärke enthaltend, wobei die Polymermischung nebst thermoplastischer Stärke mindestens eine der nachfolgenden Komponenten enthält:
- ein Polyolefin sowie ein Blockcopolymer als Phasenvermittler,
- ein Polyolefin sowie ein Aethylen-Acrylat-Maleinsäureanhydrid-Copolymer,
- ein hydrophobes biologisch abbaubares Polymer, und/oder
- Polylactid, Polyvinylacetat, Zuckeralkohol mit Ausnahme von Sorbitol, Schellack, Casein, Lecitin, Chisotan, Xantan und/oder ein Polyesteramid.

2. Textiles Erzeugnis nach Anspruch 1 für die Verwendung als Verpackungsmaterial.

3. Textiles Erzeugnis nach einem der Ansprüche 1 oder 2, dadurch gekennzeichnet, dass die thermoplastischer Stärke Glyzerin, Sorbitol und/oder Mischungen davon als Plastifiziermittel bzw. als Weichmacher enthält.

4. Textiles Erzeugnis nach einem der Ansprüche 1 bis 3, dadurch gekennzeichnet, dass die Polymermischung nebst thermoplastischer Stärke Cellulosester, Celluloseäther und/oder einen Cellulose-Acetat-Butyrat-Mischester enthält.

5. Textiles Erzeugnis nach einem der Ansprüche 1 bis 4, dadurch gekennzeichnet, dass das hydrophobe biologisch abbaubare Polymer aus der nachfolgenden Liste ausgewählt ist:
- ein aliphatischer Polyester,
- ein aliphatischer Copolyester auf Basis Polyglyconsäure, Polymilchsäuren, Polyhydroxybuttersäuren, Polycaprolactone, Polyhydroxybenzoesäuren, Polyesterpolyurethan,
- Polyester aus aliphatischen Diolen und aromatischen Dicarbonsäuren,
- ein hydrophobes Protein.
- Polyvinylalkohol, nicht 100%-ig hydrolysiert.

6. Textiles Erzeugnis nach Anspruch 5, dadurch gekennzeichnet, dass als aliphatischer Polyester Polycaprolactone, Polyhydroxybuttersäure, ein Polyhydroxybuttersäure-Hydroxyvaleriansäurecopolymer und/oder Polymilchsäure vorliegt.

7. Textiles Erzeugnis nach Anspruch 5, dadurch gekennzeichnet, das das hydrophobe Protein ein Zein ist.

8. Textiles Erzeugnis nach einem der Ansprüche 1 bis 7, dadurch gekennzeichnet, dass die Polymermischung zusätzlich eine der nachfolgenden Komponenten enthält:
ein Cellulosederivat, Gelatine, Polysaccaride, Polyacrylat und/oder ein Fettsäurederivat.

9. Textiles Erzeugnis nach einem der Ansprüche 1 bis 8, dadurch gekennzeichnet, dass die Polymermischung mindestens eines der nachfolgenden Additive enthält:
einen natürlichen Farbstoff, ein Hydrophobierungsmittel, ein Emulgator, Guar Gum, ein Vernetzungsmittel, ein Füllstoff und/oder ein Quell- oder Plastifiziermittel.

10. Textiles Erzeugnis nach einem der Ansprüche 1 bis 9, dadurch gekennzeichnet, dass die Polymermischung mit einer natürlichen Faser versetzt ist, wie Baumwolle, Wolle, Sisal, Ramie, Flachs oder Leinen.

11. Textiles Erzeugnis, im wesentlichen bestehend bzw. gefertigt aus Fasern, Fäden, Vliesen, Folien, Flocken, Watte, einem Gewebe, einem Netz, einem Filz und/oder Kombinationen davon, welche wenigstens teilweise aus einer nach einem der Ansprüche 1 oder 3 bis 10 definierten Polymermischung gefertigt ist (sind).

12. Verfahren zur Herstellung von Fäden, Fasern, Monofilen für die Herstellung eines textilen Erzeugnisses nach einem der Ansprüche 1 bis 11, dadurch gekennzeichnet, dass die Polymermischung, defininiert in einem der Ansprüche 1 oder 3 bis 10, gemäss den in der Textiltechnik bekannten Verfahren extrudiert und entsprechend verarbeitet wird.

13. Verfahren nach Anspruch 12 zur Herstellung hochfester Faden, gekennzeichnet durch die Verfahrensschritte:
a) kontinuierliches Extrudieren der Polymermischung als Folie,
b) Zerschneiden der Folie in Fäden,
c) Verstrecken der Fäden mit einem Streckverhältnis von 1:4 bis 1:20, und
d) Aufspulen der Fäden und gegebenenfalls Weiterverarbeitung zu Geweben.

14. Verfahren nach Anspruch 12 zur Herstellung hochfester Fäden, gekennzeichnet durch die Verfahrensschritte:
a) kontinuierliches Extrudieren der biologisch abbaubaren Polymermischung als Faden,
b) Verstrecken der Fäden mit einem Streckverhältnis von 1:4 bis 1:20, und
c) Aufspulen der Fäden und gegebenenfalls Weiterverarbeitung zu Geweben.

15. Verfahren nach einem der Ansprüche 13 oder 14, dadurch gekennzeichnet, dass das Verstrecken bei Temperaturen unter 60°C erfolgt.

16. Verfahren nach Anspruch 15, dadurch gekennzeichnet, dass das Verstrecken in einem Temperaturbereich zwischen 30 bis 40°C erfolgt.

17. Verfahren nach einem der Ansprüche 12 bis 16, dadurch gekennzeichnet, dass das Verstrecken in einem gasförmigen oder flüssigen Medium erfolgt.

18. Verfahren nach Anspruch 15 oder 16, dadurch gekennzeichnet, dass die Fäden in Luft oder Wasser verstreckt werden.

19. Verfahren nach einem der Ansprüche 13 bis 18, dadurch gekennzeichnet, dass die Verstreckung monoaxial erfolgt.

20. Verfahren nach einem der Ansprüche 13 bis 19, dadurch gekennzeichnet, dass die Verfahrensschritte a) bis d) bzw. a) bis c) kontinuierlich und einstufig ablaufen.

21. Verfahren nach einem der Ansprüche 13 bis 19, dadurch gekennzeichnet, dass die Fäden kontinuierlich und einstufig direkt zu Geweben weiterverarbeitet werden.

22. Verwendung hochfester Fäden, erhältlich als Endprodukt nach dem Verfahren einer der Ansprüche 13 bis 21, im Landschafts- und Gartenbau und/oder als Verpackungsmaterial oder zur Herstellung vollständig biologisch abbaubarer Netze, Gewebe, Filze, Vliese, Flocken, Watten, Textilien oder Seile mit offenen, halbdichten oder dichten Strukturen.

23. Verwendung des textilen Erzeugnisses nach einem der Ansprüche 1 bis 11 für die Herstellung von Hygieneartikeln.

24. Verwendung des textilen Erzeugnisses nach einem der Ansprüche 1 bis 11 für die Herstellung von Windeln, Binden, Inkontinenzprodukten sowie Betteinlagen.

25. Verfahren zur Herstellung eines Hygieneartikels, dadurch gekennzeichnet, dass auf einem Vlies, im wesentlichen bestehend aus Fasern, bestehend aus einer thermoplastischen Stärke oder einer Polymermischung, basierend auf thermoplastischer Stärke, eine Schicht aus Celluloseflocken bzw. eine weiche Cellstoffschicht aufgetragen wird, nachfolgend auf die Celluloseschicht gegebenenfalls ein weiteres Cellulosevlies aus Trockenpapier sowie eine Flocken- oder Watteschicht aus einer thermoplastischen Stärke oder einer Mischung, basierend auf thermoplastischer Stärke aufgetragen wird sowie schliesslich eine Deckschicht, wiederum bestehend aus einer thermoplastischen Stärke oder einer Polymermischung, basierend auf thermoplastischer Stärke, wobei die Polymermischung, definiert in einem der Ansprüche 1 oder 3 bis 10, mindestens einmal als Komponente des herzustellenden Hygieneartikels vorkommt.

## Claims

1. Textile product for technical as well as non-technical use, comprising at least one biologically degradable polymer mixture containing thermoplastic starch, wherein the polymer mixture apart from thermoplastic starch contains at least one of the following components:
- a polyolefin as well as a block copolymer as phase mediator,
- a polyolefin as well as an ethylene-acrylate-maleic-anhydride copolymer,
- a hydrophobic biologically degradable polymer and/or
- polylactide, polyvinylacetate, sugar alcohol with the exception of sorbitol, shellac, casein, lecithin, chisotane, xantane and/or a polyester amide.

2. Textile product according to claim 1 for use as a packaging material.

3. Textile product according to one of claims 1 and 2, characterised in that the thermoplastic starch contains glycerin, sorbitol and/or mixtures thereof as plasticising agent or as softener.

4. Textile product according to one of claims 1 to 3, characterised in that the polymer mixture contains, apart from thermoplastic starch, cellulose ester, cellulose ether and/or a cellulose-acetate-butyrate mixed ester.

5. Textile product according to one of claims 1 to 4, characterised in that the hydrophobic biologically degradable polymer is selected from the following list:
- an aliphatic polyester,
- an aliphatic copolyester on the basis of polyglyconic acid, polylactic acids, polyhydroxybutyric acids, polycaprolactone, polyhydroxybenzoic acids, polyester-polyurethane,
- polyester from aliphatic diols and aromatic dicarbon acids,
- a hydrophobic protein,
- polyvinylalcohol not hydrolysed 100%.

6. Textile product according to claim 5, characterised in that polycaprolactone, polyhydroxybutyric acid, a polyhydroxybutyric acid and hydroxyvaleric acid copolymer and/or polylactic acid is or are present as the aliphatic polyester.

7. Textile product according to claim 5, characterised in that the hydrophobic product is a zein.

8. Textile product according to one of claims 1 to 7, characterised in that the polymer mixture additionally contains one of the following components: a cellulose derivative, gelatine, polysaccaride, polyacrylate and/or a fatty acid derivative.

9. Textile product according to one of the claims 1 to 8, characterised in that the polymer mixture contains at least one of the following additives: a natural dyestuff, a hydrophobising agent, an emulsifier, guar gum, a wetting agent, a filler and/or a swelling agent or plasticising agent.

10. Textile product according to one of claims 1 to 9, characterised in that the polymer mixture is replaced by a natural fibre such as cotton, wool, sisal, ramie, flax or linen.

11. Textile product substantially consisting or made of fibres, threads, fleeces, foils, flocks, wadding, a tissue, a lattice, a felt and/or combinations thereof, which is or are made at least partially from a polymer mixture defined according to one of claims 1 and 3 to 10.

12. Method of producing threads, fibres, monofilaments for the production of a textile product according to one of claims 1 to 11, characterised in that the polymer mixture defined in one of claims 1 and 3 to 10 is extruded and correspondingly processed in accordance with the methods known in textile technology.

13. Method according to claim 12 for the production of high-strength threads, characterised by the method steps:
a) continuous extruding of the polymer mixture as foil,
b) cutting up the foil into threads,
c) stretching the threads with an elongation ratio of 1:4 to 1:20 and
d) reeling up the threads and in a given case further processing thereof into fabric.

14. Method according to claim 12 for the production of high-strength threads, characterised by the method steps:
a) continuous extruding of the biologically degradable polymer mixture as threads;
a) continuous extruding of the biologically degradable polymer mixture as threads;
b) stretching the threads with an elongation ratio of 1:4 to 1:20 and
c) reeling up the threads and in a given case further processing thereof into fabric.

15. Method according to one of claims 13 and 14, characterised in that the stretching takes place at temperatures below 60°C.

16. Method according to claim 15, characterised in that the stretching takes place in a temperature range between 30 and 40°C.

17. Method according to one of claims 12 to 16, characterised in that the stretching takes place in a gaseous or liquid medium.

18. Method according to claim 15 or 16, characterised in that the threads are stretched in air or water.

19. Method according to one of claims 13 to 18, characterised in that the stretching takes place monoaxially.

20. Method according to one of claims 13 to 19, characterised in that the method steps a) to d) or a) to c) elapse continuously and in a single stage.

21. Method according to one of claims 13 to 19, characterised in that the threads are further processed continuously and in a single stage directly into fabrics.

22. Use of high-strength threads obtainable as end product in accordance with the method of one of claims 13 to 21, in landscaping and horticulture and/or as packaging material or for the production of completely biodegradable lattices, fabrics, felts, fleeces, flocks, waddings, textiles or ropes with open, semi-sealed or sealed structures.

23. Use of the textile product according to one of claims 1 to 11 for the production of hygienic articles.

24. Use of the textile product according to one of claims 1 to 11 for the production of diapers, bandages, incontinence products as well as bed liners.

25. Method of producing an hygienic article, characterised in that a layer of cellulose flocking or a soft cell material layer is applied to a fleece substantially consisting of threads which consist of a thermoplastic starch or a polymer mixture based on thermoplastic starch, subsequently in a given case a further cellulose fleece of dry paper as well as a flock or wadding layer of a thermoplastic starch or a mixture based on thermoplastic starch is applied to the cellulose layer, and finally a covering layer in turn consisting of a thermoplastic starch or a polymer mixture based on thermoplastic starch, wherein the polymer mixture defined in one of claims 1 and 3 to 10 occurs at least once as a component of the hygienic article to be produced.

## Revendications

1. Produit textile pour utilisation industrielle ainsi que non industrielle, contenant au moins un mélange polymère biodégradable, contenant de l'amidon thermoplastique, où le mélange polymère, outre l'amidon thermoplastique, contient au moins l'un des composants suivants :
- une polyoléfine ainsi qu'un bloc copolymère comme intermédiaire entre les phases,
- une polyoléfine ainsi qu'un copolymère éthylène-acrylate-anhydride maléique,
- un polymère biodégradable hydrophobe et/ou
- un polylactide, un acétate de polyvinyle, un alcool de sucre à l'exception du sorbitol, de la gomme laque, de la caséine, de la lécithine, du chitosane, du xanthane et/ou un polyester amide.

2. Produit textile selon la revendication 1 pour utilisation comme matériau d'emballage.

3. Produit textile selon l'une des revendications 1 ou 2,
caractérisé en ce que
l'amidon thermoplastique contient de la glycérine, du sorbitol et/ou leurs mélanges comme agents plastifiants.

4. Produit textile selon l'une des revendications 1 à 3,
caractérisé en ce que
le mélange polymère contient, outre l'amidon thermoplastique, des esters de cellulose, des éthers de cellulose et/ou un ester mixte acétate-butyrate de cellulose.

5. Produit textile selon l'une des revendications 1 à 4,
caractérisé en ce que
le polymère biodégradable hydrophobe est choisi dans la liste suivante :
- un polyester aliphatique,
- un copolyester aliphatique à base d'acide polyglyconique, d'acides polylactiques, d'acides polyhydroxybutyriques, de polycaprolactones, d'acides polyhydroxybenzoïques, de polyester polyuréthane,
- les polyesters de diols aliphatiques et d'acides dicarboxyliques aromatiques,
- une protéine hydrophobe,
- de l'alcool polyvinylique non hydrolysé à 100 %.

6. Produit textile selon la revendication 5,
caractérisé en ce qu'
on a comme polyester aliphatique la polycaprolactone, l'acide polyhydroxybutyrique, un copolymère acide polyhydroxybutyrique-acide hydroxyvalérique, et/ou de l'acide polylactique.

7. Produit textile selon la revendication 5,
caractérisé en ce que
la protéine hydrophobe est une zéine.

8. Produit textile selon l'une des revendications 1 à 7,
caractérisé en ce que
le mélange polymère contient en outre l'un des composants suivants :
un dérivé de cellulose, de la gélatine, des polysaccharides, un polyacrylate et/ou un dérivé d'acide gras.

9. Produit textile selon l'une des revendications 1 à 8,
caractérisé en ce que
le mélange polymère contient au moins l'un des additifs suivants :
un colorant naturel, un agent d'hydrophobisation, un émulsifiant, de la gomme de guar, un agent réticulant, une charge et/ou un agent gonflant ou plastifiant.

10. Produit textile selon l'une des revendications 1 à 9,
caractérisé en ce que
le mélange polymère est mélangé à une fibre naturelle, comme le coton, la laine, le sisal, la ramie ou le lin.

11. Produit textile constitué ou fabriqué essentiellement à partir de fibres, de fils, de voiles, de feuilles, de bourre, d'ouate, d'un tissu, d'un réseau, d'un feutre et/ou de leurs combinaisons qui est fabriqué au moins en partie à partir d'un mélange polymère défini selon l'une des revendications 3 à 10.

12. Procédé de fabrication de fils, de fibres, de monofils pour la fabrication d'un produit textile selon l'une des revendications 1 à 11,
caractérisé en ce qu'
on extrude le mélange polymère, défini dans l'une des revendications 1 ou 3 à 10, selon les procédés connus dans la technique textile et en ce qu'on le transforme de la façon correspondante.

13. Procédé selon la revendication 12 de fabrication de fils très solide,
caractérisé par les étapes opératoires suivantes :
a) extrusion en continu du mélange polymère sous forme de feuille,
b) découpage de la feuille en fils,
c) étirage des fils avec un rapport d'étirement de 1:4 à 1:20 et
d) bobinage des fils et le cas échéant transformation ultérieure en tissus.

14. Procédé selon la revendication 12 de fabrication de fils très solides,
caractérisé par les étapes opératoires suivantes :
a) extrusion en continu du mélange polymère biodégradable sous forme de fils,
b) étirage des fils avec un rapport d'étirement de 1:4 à 1:20 et,
c) bobinage des fils et le cas échéant transformation ultérieure en tissus.

15. Procédé selon l'une des revendications 13 ou 14,
caractérisé en ce que
l'étirage se fait à des températures inférieures à 60°C.

16. Procédé selon la revendication 15,
caractérisé en ce que
l'étirage se fait dans un intervalle de température compris entre 30 et 40°C.

17. Procédé selon l'une des revendications 12 à 16,
caractérisé en ce que
l'étirage s'effectue dans un milieu gazeux ou liquide.

18. Procédé selon la revendication 15 ou 16,
caractérisé en ce qu'
on étire les fils dans l'air ou dans l'eau.

19. Procédé selon l'une des revendications 13 à 18,
caractérisé en ce qu'
on procède à un étirage monoaxial.

20. Procédé selon l'une des revendications 13 à 19,
caractérisé en ce que
les étapes opératoires a) à d) ou selon les cas a) à c) se déroulent de façon continue et en une étape.

21. Procédé selon l'une des revendications 13 à 19,
caractérisé en ce qu'
on transforme les fils directement en tissu de façon continue et en une étape.

22. Utilisation de fils très solides, que l'on peut obtenir comme produit final selon le procédé de l'une des revendications 13 à 21, en agriculture et en horticulture et/ou comme matériau d'emballage ou pour fabriquer des filets, tissus, feutres, voiles, bourre, ouate, textile ou voiles entièrement biodégradables qui ont des structures ouvertes, semi-étanches ou étanches.

23. Utilisation du produit textile selon l'une des revendications 1 à 11 pour la fabrication d'articles d'hygiène.

24. Utilisation du produit textile selon l'une des revendications 1 à 11 pour la fabrication de couches, de pansements, de produits d'incontinence ainsi que de toiles de lit.

25. Procédé de fabrication d'un article d'hygiène,
caractérisé en ce que
sur une voile, constituée essentiellement de fibres constituée d'un amidon thermoplastique ou d'un mélange polymère, à base d'un amidon thermoplastique, on dépose une couche de bourre de cellulose ou selon les cas une couche de matière cellulosique molle, puis en ce que sur la couche de cellulose on dépose le cas échéant un autre voile de cellulose en papier sec ainsi qu'une couche de bourre ou d'ouate faite d'un amidon thermoplastique ou d'un mélange à base d'amidon thermoplastique, et enfin en ce qu'on dépose une couche de recouvrement, constituée à son tour d'un amidon thermoplastique ou d'un mélange polymère à base d'amidon thermoplastique, le mélange polymère, défini dans l'une des revendications 1 ou 3 à 10, se présentant au moins sous forme de composant de l'article d'hygiène à fabriquer.
